(19) **Europäisches Patentamt**
**European Patent Office**
**Office européen des brevets**

(11) **EP 2 449 407 B1**

(12) **FASCICULE DE BREVET EUROPEEN**

(45) Date de publication et mention
de la délivrance du brevet:
**12.10.2016 Bulletin 2016/41**

(21) Numéro de dépôt: **10734264.4**

(22) Date de dépôt: **17.06.2010**

(51) Int Cl.:
**G01S 7/02** *(2006.01)* **G01S 15/88** *(2006.01)*
**G01S 7/537** *(2006.01)* **G01S 15/10** *(2006.01)*

(86) Numéro de dépôt international:
**PCT/FR2010/051218**

(87) Numéro de publication internationale:
**WO 2011/001059 (06.01.2011 Gazette 2011/01)**

(54) **PROCEDE DE TELEMETRIE A ULTRASONS POUR DRONE, AVEC DISCRIMINATION DES ECHOS PARASITES ISSUS D'UN AUTRE DRONE**

VEFAHREN FÜR ULTRASCHALLTELEMETRIE FÜR DROHNEN MIT UNTERSCHEIDUNG VON STÖRECHOS EINER ANDEREN DROHNE

METHOD OF ULTRASOUND TELEMETRY FOR DRONES, WITH DISCRIMINATION OF SPURIOUS ECHOS EMANATING FROM ANOTHER DRONE

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **02.07.2009 FR 0954552**

(43) Date de publication de la demande:
**09.05.2012 Bulletin 2012/19**

(73) Titulaire: **Parrot Drones**
**75010 Paris (FR)**

(72) Inventeur: **POCHON, Benoît**
**F-75010 Paris (FR)**

(74) Mandataire: **Dupuis-Latour, Dominique et al**
**Bardehle Pagenberg**
**10, boulevard Haussmann**
**75009 Paris (FR)**

(56) Documents cités:
**DE-A1- 4 003 775       US-A- 4 845 682**
**US-A1- 2003 112 705    US-B1- 6 545 946**

• **QINGHAO MENG ET AL: "Review of Crosstalk Elimination Methods for Ultrasonic Range Systems in Mobile Robots" INTELLIGENT ROBOTS AND SYSTEMS, 2006 IEEE/RSJ INTERNATIONAL CONFERENCE ON, IEEE, PI, 1 octobre 2006 (2006-10-01), pages 1164-1169, XP031006234 ISBN: 978-1-4244-0258-8**

## Description

L'invention concerne l'estimation des distances par un procédé de télémétrie à ultrasons mis en oeuvre par des drones, notamment pour la mesure de l'altitude à laquelle évolue le drone.

Le drone est muni d'un transducteur électroacoustique permettant l'émission et la réception d'ultrasons. Ce transducteur émet une brève salve d'ultrasons de quelques dizaines ou centaines de microsecondes, puis attend le retour de l'écho acoustique envoyé après réflexion sur le sol. Le laps de temps séparant l'émission de la salve de la réception de l'écho permet, connaissant la vitesse du son, d'estimer la longueur du chemin acoustique parcouru et donc d'évaluer l'altitude du drone.

Cette mesure est réitérée à intervalles rapprochés, avec une périodicité d'émission des salves d'ultrasons correspondant à une fréquence dite "fréquence de récurrence", généralement liée à la fréquence de fonctionnement de la centrale inertielle du drone. La période séparant deux salves, dénommée "période d'acquisition" ou "trame temporelle", est consacrée à détecter le(s) pic(s) de signal acoustique correspondant à la réception d'un écho. Généralement, cette analyse est opérée numériquement, le temps écoulé depuis la salve d'ultrasons étant alors exprimé en nombre d'échantillons, comptés à la fréquence d'échantillonnage du circuit numérique.

Cette technique, employée dans des applications très variées, est décrite notamment dans les US 4 845 682 A (pour l'évitement entre convoyeurs robotisés d'une chaîne de fabrication employant tous le même type de détecteur à ultrasons), US 6 545 946 B1 (pour un capteur de niveau de liquide dans une cuve, avec filtrage des échos parasites), DE 40 03 775 A1 (pour des radars anticollision, tenant compte des véhicules venant en sens inverse et également équipés de radars du même type), ou encore US2003/112705 A1 (pour un altimètre d'hélicoptère, avec compensation de la non-réciprocité entre le transducteur d'émission et le transducteur de réception des ultrasons).

En pratique, après émission d'une salve unique, le transducteur reçoit une pluralité d'échos, résultant de réflexions multiples ou de réflexions sur des cibles autres que le sol.

La télémétrie par ultrasons présente en effet la particularité d'être assez peu directive, et donc sujette à la multiplication des échos parasites.

Lorsque plusieurs drones similaires évoluent simultanément à proximité les uns des autres, une difficulté particulière apparaît, tenant au fait que pendant la période d'acquisition suivant l'émission d'une salve, un drone peut recevoir non seulement des échos de son propre signal (écho utile, correspondant à la réflexion sur le sol, ou échos parasites produits par d'autres réflexions de ce même signal), mais également des signaux acoustiques issus des transducteurs d'autres drones, conduisant alors à une perturbation des mesures.

Il est relativement aisé de filtrer les échos parasites produits par les réflexions multiples, car ils se manifesteront le plus souvent après l'arrivée de l'écho réel. En revanche, il est très difficile de discriminer les échos provenant d'une salve émise par un autre drone, notamment lorsque les trajets de propagation ont des longueurs relativement proches.

La présente invention vise à résoudre ce problème particulier tenant à la perturbation des mesures en présence de plusieurs drones similaires fonctionnant en même temps.

L'idée de base de l'invention repose sur le fait que, si l'on prévoit des fréquences de récurrence légèrement différentes pour deux drones, on observera pour un drone donné, au fur et à mesure des trames d'acquisition successives, une dérive de la position du pic correspondant à l'écho reçu en provenance de l'autre drone.

L'invention propose d'utiliser cette propriété pour reconnaître et filtrer les pics parasites provenant d'une salve émise par un autre drone, de manière à ne conserver que le pic utile correspondant à la distance à estimer à partir de l'écho produit par la salve d'ultrasons émise par le drone considéré.

Plus précisément, l'invention propose un procédé comprenant, de manière en elle-même connue d'après le US 4 845 682 A précité, les éléments énoncés au préambule de la revendication 1. La partie caractérisante de cette revendication 1 présente les éléments originaux, propres à l'invention, permettant de résoudre le problème ci-dessus.

Les sous revendications visent des modes de mise en oeuvre subsidiaires, avantageux.

On va maintenant décrire un exemple de mise en oeuvre de l'invention, en référence aux dessins annexés sur lesquels les mêmes références numériques désignent des éléments identiques ou fonctionnellement semblables.

La Figure 1 illustre schématiquement deux drones évoluant à proximité l'un de l'autre, et montre les différents signaux susceptibles d'être captés par le transducteur à ultrasons.

La Figure 2 présente deux chronogrammes montant, pour chacun des deux drones de la Figure 1, les différents instants d'émission et de réception des signaux acoustiques à ultrasons.

La Figure 3 montre la position temporelle, au cours de trois trames d'acquisition successives, des pics de signal reçu et la manière de les discriminer.

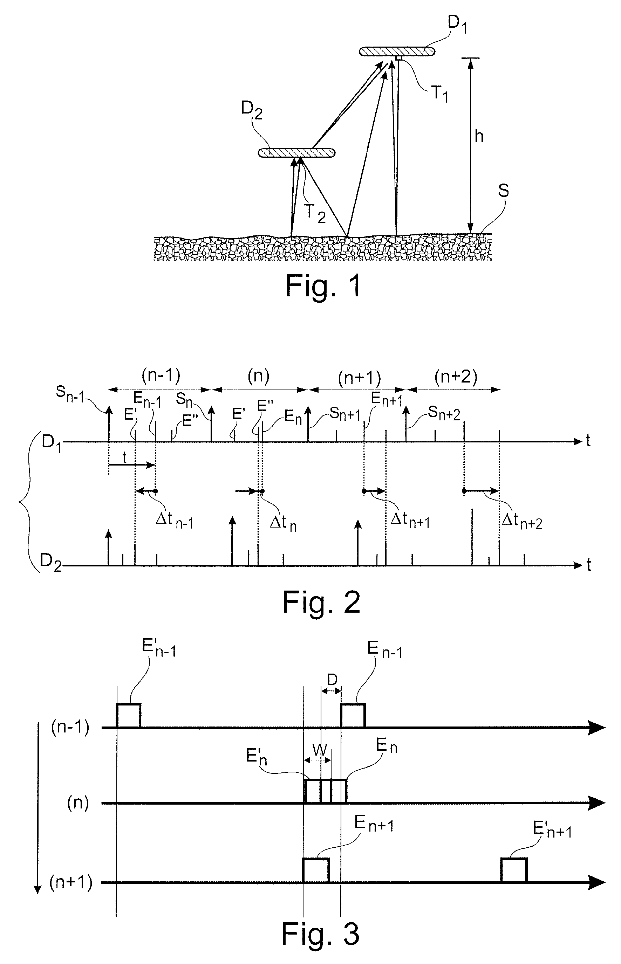

Sur la Figure 1, on a représenté un drone D1 évoluant à une altitude h au-dessus du sol S. Le drone D1 est muni d'un transducteur électroacoustique T1 permettant l'émission/réception d'ultrasons en direction du sol.

La technique normale de télémétrie consiste à émettre en direction du sol une brève salve d'ultrasons (par exemple de durée 300 μs), et de compter le temps de retour après réflexion sur le sol, pour en dériver l'altitude h. Une difficulté particulière se présente lorsqu'un autre drone D2, de conception semblable au drone D1, évolue à proximité de D1. Ce drone est également muni d'un transducteur T2 semblable à T1, qui émet aussi des salves d'ultrasons, à une fréquence de récurrence proche de celle de la fréquence de récurrence de l'émission des ultrasons par le transducteur T1.

Le signal acoustique reçu par T1 est donc susceptible d'être parasité par les échos du signal émis par T1 et réfléchis sur D2 (qui risque d'être confondu avec le sol S) et, d'autre part et surtout, par les ultrasons émis par T2 et captés par T1.

Compte tenu des fréquences de récurrence relativement proches de D1 et D2, ce dernier signal peut introduire des perturbations importantes, par exemple si les drones volent à des altitudes comparables. Dans ce cas, le drone D1 ne pourra plus faire la distinction entre les échos provenant des salves émises par son propre transducteur T1 et les échos provenant des salves émises par le transducteur T1 de l'autre drone D2.

L'invention a essentiellement pour but de résoudre cette difficulté.

Au préalable, les fréquences de récurrence respectives des drones D1 et D2 sont ajustées de manière à présenter une légère différence, typiquement de l'ordre de 3 à 10 %, de préférence 5 % (on expliquera plus bas les raisons et les critères de ce choix des fréquences).

Afin de mieux comprendre ce choix des fréquences de récurrence, on peut calculer la vitesse apparente minimale du drone parasite durant deux trames successives. Si $T$ et $T'$ (respectivement $F$ et $F'$) sont les périodes (respectivement les fréquences) de récurrence des deux drones, alors le déplacement vu par un drone vaut $d_{min} = (T' - T)*c$ ($c$ étant la célérité du son).

Ce déplacement est atteint lorsque les drones se déplacent dans des directions opposées, configuration correspondant à une vitesse apparente $v_{apparente} = d_{min}/T$. Avec une différence de fréquence de $x$ %, (c'est-à-dire $F' = F*(1+x/100)$), cette vitesse apparente vaut environ $v_{apparente} = c*x/100$. On obtient donc une vitesse apparente de l'ordre de 17 m/s pour 5 % de différence, ce qui est bien plus grand que les vitesses que l'on cherche à mesurer (de l'ordre de 1 m/s)

La faible différence des fréquences de récurrence des deux drones va provoquer au fil des trames d'acquisition successives des échos reçus par D1, une légère dérive des échos en provenance du transducteur T2 de l'autre drone D2, par rapport aux échos provenant de son propre transducteur T1.

On va décrire la manière dont ce phénomène peut être détecté et analysé, pour discriminer les échos utiles provenant du transducteur T1 des échos parasites provenant du transducteur T2 de l'autre drone.

Sur la Figure 2, on a illustré sur le chronogramme D1 quatre trames d'acquisition successives, référencées ($n$-1), ($n$), ($n$+1) et ($n$+2), faisant suite à des émissions successives de salves aux instants $S_{n-1}$, $S_n$, $S_{n+1}$ et $S_{n+2}$. En réponse à l'émission de la salve $S_{n-1}$, le transducteur T1 du drone D1 reçoit un écho utile $E_{n-1}$, correspondant à la réflexion sur le sol et représentatif de l'altitude réelle du drone. Mais cet écho utile est parasité par d'autres échos tels que E' et E", provenant des salves émises par l'autre drone (chronogramme D2 de la Figure 2). Toutefois, du fait de la légère différence des fréquences de récurrence des deux drones - différence qui a été accentuée sur la Figure 2 pour la clarté de l'illustration -, l'écart $\Delta t_{n-1}$, $\Delta t_n$, $\Delta t_{n+1}$, $\Delta t_{n+2}$ ... entre le pic utile $E_{n-1}$, $E_n$, $E_{n+1}$ ... et le pic parasite E' va varier au fil des trames successives. En revanche, le laps de temps $t$ séparant l'écho utile $E_{n-1}$, $E_n$, $E_{n+1}$, ... de l'origine des temps constituée par l'instant d'émission de la salve correspondante $S_{n-1}$, $S_n$, $S_{n+1}$ ..., ne variera pas, ou pratiquement pas.

De ce fait, au cours des trames successives, certains pics (dont le pic utile) ne varieront pas ou peu, tandis que d'autres pics (les pics parasites provenant des ultrasons émis par l'autre drone) présenteront une dérive significative, qui permettra de les identifier et de les éliminer ensuite. Pour opérer cette discrimination, l'algorithme d'analyse stocke, pour chaque trame, les instants de survenue des p pics reçus au cours de la trame numéro ($n$-1) sous forme d'un tableau $T_{n-1}$ [$i_{1,n-1}$, $i_{2,n-1}$, ... $i_{p,n-1}$] (le temps étant exprimé en nombre d'échantillons depuis le début de la salve sous forme d'un indice $i$ représentatif de la position du pic sur l'échelle des temps).

L'opération est répétée pour la trame suivante : $T_n$ [$i_{1,n}$, $i_{2,n}$, ... $i_{q,n}$] pour les $q$ pics détectés au cours de cette trame (la plupart du temps $p = q$). L'algorithme calcule ensuite, pour chacun des $p.q$ couples de pics, l'écart temporel relatif correspondant, et ne retient que les pics pour lesquels, parmi les q pics de la trame courant, cet écart temporel relatif est inférieur à un seuil D donné (on exposera plus bas la manière dont ce seuil est déterminé). En effet, si les écarts temporels relatifs sont supérieurs au seuil, ceci révèle une dérive importante du pic d'une trame à l'autre, révélateur du caractère parasite du pic.

Si, au terme de ce filtrage, il subsiste encore plusieurs pics, on applique un critère supplémentaire, par exemple en ne retenant que le premier pic de la trame dans l'ordre de survenue des pics successifs (ceci revient à faire l'hypothèse que les pics ultérieurs correspondent à des réflexions multiples, donc parasites).

On peut également, dans certaines configurations, retenir non pas le premier mais le dernier pic dans l'ordre de survenue, par exemple en présence d'échos parasites correspondant à une réflexion sur un autre drone plutôt qu'une réflexion sur le sol.

En pratique, le nombre de pics détectés au cours d'une même trame dépasse rarement 5, de sorte que le nombre de comparaison des instants d'arrivée ne dépasse pas 25, ce qui reste raisonnable en termes de puissance de calcul nécessaire.

L'altitude est estimée en fonction de l'instant d'arrivée du pic finalement retenu.

Un perfectionnement à l'algorithme que l'on vient de décrire consiste, à l'issue de la comparaison entre les $q$ pics de la trame courante et les $p$ pics de la trame précédente, s'il se trouve que deux pics sont dans le même intervalle de temps $D$, à ne prendre que le pic de la trame précédente comme indicateur de la hauteur, plutôt que celui de la trame courante.

En effet, on constate empiriquement que le drone est souvent en vol stationnaire et que ce sont les pics perturbateurs qui apparaissent le plus souvent, et choisir arbitrairement le premier ou le second pic dans l'intervalle de temps $D$ conduirait à une erreur plus importante (majorée par $D$).

On va maintenant expliquer la manière dont on détermine le seuil de détection $D$, en référence notamment à la Figure 3.

On utilisera les notations suivantes :

$D$         valeur du seuil exprimée en nombre d'échantillons,
$V_{max}$    vitesse maximale du drone dans la direction d'estimation de la distance,
$F_s$       fréquence d'échantillonnage du signal reçu,
$c$          vitesse de propagation du son,
$F_{drone}$   fréquence de récurrence des émissions de salves, et
$W$       largeur temporelle de la salve, en nombre d'échantillons.

La différence de chemin acoustique entre deux émissions successives d'une salve est, pour un drone en mouvement à sa vitesse maximale dans la direction d'estimation de la distance, inférieure à 2 $V_{max}.T_{drone}$, c'est-à-dire, en termes de nombre d'échantillons :

$$D = 2 * V_{max} * F_s / (c * F_{drone})$$

Une difficulté se présente toutefois lorsque, comme illustré Figure 3, le pic parasite $E'_n$ chevauche le pic utile $E_n$ lors d'une trame donnée (la trame numéro $n$ sur la Figure 3). On peut voir sur cette figure un décalage du pic utile $E_{n-1}$, $E_n$, $E_{n+1}$, au cours des trames successives $(n-1)$, $(n)$, $(n+1)$. Ce décalage est dû au déplacement du drone dans la direction d'estimation de la distance (typiquement un déplacement ascensionnel), mais il est très inférieur au déplacement du pic parasite $E'_{n-1}$, $E'_n$, $E'_{n+1}$, déplacement qui est essentiellement dû à la différence entre la fréquence de récurrence du drone D2 et celle du drone D1.

Pour traiter le cas du chevauchement des pics utiles et parasites $E_n$ et $E'_n$, deux possibilités sont envisageables.

La première possibilité consiste à conserver pour le seuil la valeur D exprimée ci-dessus, avec pour conséquence que la trame $n$ ne contiendra aucun pic valide et qu'aucune distance ne pourra être estimée pour cette trame.

Une autre possibilité consiste à augmenter le seuil d'un terme correctif $W.F_s$ : dans ce cas, un pic valide sera effectivement détecté pour la trame $n$, mais avec une erreur supplémentaire ($W$) sur la position de ce pic, donc avec une erreur supplémentaire sur l'estimation de l'altitude du drone. On va donner à titre d'illustration un exemple numérique, sans aucun caractère limitatif, basé sur les valeurs suivantes :

$V_{max}$ = 1,5 m/s
$F_s$ = 150 kHz
$c$ = 340 m/s
$F_{drone}$ = 50 Hz
$W$ = 0,3 ms

Avec ces valeurs, le seuil $D$ sans terme correctif est $D$ = 26 échantillons, soit une erreur de 3 cm sur l'altitude du drone à la fréquence d'échantillonnage considérée.

Si l'on augmente le seuil $D$ du terme correcteur $W.F_s$, le seuil de détection augmente à 26 + 45 = 71 échantillons, soit une erreur de 8 cm sur l'altitude.

La première technique procure ainsi une précision de mesure supérieure, mais avec un plus grand nombre de trames invalides (on peut estimer par simulation le taux de mesures erronées à 1 par seconde). A l'opposé, la second technique délivre des mesures pour pratiquement toutes les trames, mais au prix d'une précision moindre.

On va maintenant exposer de façon détaillée la manière dont sont choisies les fréquences de récurrence des drones, en fonction notamment du seuil $D$ que l'on a déterminé.

Les fréquences des deux drones sont ajustées à une valeur fixe dès le début, et maintenues à cette valeur par la suite (un changement dynamique des fréquences nécessiterait une communication entre les drones, compliquant inutilement le processus). Le choix de ces fréquences est un compromis :

- d'une part on souhaite des fréquences proches, pour que les drones aient des systèmes d'estimation de l'altitude de réactivité similaire ;
- d'autre part le seuil $D$ utilisé dans la comparaison est lié à la vitesse relative maximale des deux drones, et il est donc indépendant du choix de fréquence : de ce fait, si les fréquences sont trop proches on risque de se trouver dans un cas où le déplacement relatif d'un drone par rapport est inférieur à $D$.

Pour tenir compte de ces contraintes, il est possible de choisir les fréquences respectives $F_1$ et $F_2$ des drones D1 et D2 de la manière suivante. Pour le drone D1, à cause de la vitesse maximale relative des drones entre eux, le seuil vaut :

$$D_1 = 2*V_{max}*F_s/(c*F_1)$$

La vitesse apparente minimale du drone D2 vu par le drone D1 est (dans le cas ou les drones vont dans le même sens) :

$$( 1/F_1 - 1/F_2 )*F_s$$

Il faut donc que la relation suivante soit vérifiée :

$$\text{abs}( 1/F_1 - 1/F_2 )*F_s > D_1 ,$$

et par un raisonnement similaire :

$$\text{abs}( 1/F_1 - 1/F_2 )*F_s > D_2$$

En combinant ces deux équations, il vient :

$$\text{abs}( 1/F_1 - 1/F_2 )*F_s > \max(D_1,D_2)=2*V_{max}*F_s/(c*\min(F_1,F_2)) ,$$

ce qui peut se réécrire :

$$\text{abs}(F_1-F_2)/\max(F_1,F_2) > 2*V_{max}/c$$

Cette relation donne l'écart minimal des fréquences en fonction de la vitesse maximale des drones.
Cette condition peut également se formuler de la manière suivante : "étant donné un drone D1 à la fréquence $F_1$ et une vitesse relative maximale $V_{max}$, alors la fréquence minimale $F_2$, supérieure à $F_1$, d'un autre drone D2 sera :

$$F_2 = F_1*2*V_{max}/c/(1-2*V_{max}/c) ."$$

On peut généraliser le même raisonnement en considérant en outre la largeur $W$, non nulle, des pics. Les seuils sont alors :

$$D_1 = 2* V_{max}*F_s/(c*F_1) + W$$

et

$$D_2 = 2^* V_{max}^* F_s/(c^* F_2) + W$$

On démontre de la même manière que les fréquences doivent vérifier :

$$\text{abs}(F_1-F_2)/\max(F_1,F_2) > 2^*V_{max}/c + W^*\min(F_1,F_2)/F_s$$

C'est-à-dire : "étant donné un drone D1 à la fréquence $F_1$ et une vitesse relative maximale $V_{max}$, alors la fréquence minimale $F_2$, supérieure à $F_1$, d'un autre drone sera :

$$F_2 = F_1^*2^*V_{max}/c/(1-2^*V_{max}/c) + W^*F_1/F_s/(1-2^*V_{max}/c) ."$$

**Revendications**

1. Un procédé d'estimation d'une distance par télémétrie à ultrasons, comprenant les étapes suivantes :

   a) émission, à partir d'un instant d'origine des temps, d'une salve d'ultrasons, cette émission étant répétée à une fréquence de récurrence prédéterminée ;
   b) après la fin de chaque émission et pendant la durée d'une trame temporelle ($n$-1, $n$, $n$+1, ...) séparant deux émissions consécutives, réception d'une pluralité de pics de signal successifs apparaissant à des instants d'arrivée respectifs au cours de la même trame, ces pics de signal successifs incluant des pics parasites ($E'_{n-1}$, $E'_n$, $E'_{n+1}$, ...) et un pic utile ($E_{n-1}$, $E_n$, $E_{n+1}$, ...) correspondant à la distance à estimer ;
   c) pour deux trames consécutives, comparaison des instants d'arrivée des $p$ pics de signal de la trame courante avec les instants d'arrivée des $q$ pics de signal de la trame précédente et détermination, pour chacun des $p.q$ couples de pics, d'un écart temporel relatif correspondant ;
   d) sélection d'un seul pic de la trame courante en fonction des $p.q$ écarts temporels relatifs déterminés à l'étape c) ; et
   e) estimation de la distance en fonction de l'instant d'arrivée du pic retenu à l'étape d) par rapport à l'instant d'émission de la dernière salve,

   **caractérisé en ce que** :

   - ce procédé est mis en oeuvre par un drone (D1) pour une mesure d'altitude ($h$) du drone ;
   - il est prévu une étape préalable d'ajustement de ladite fréquence de récurrence à une valeur prédéterminée différente de la fréquence de récurrence correspondante d'un autre drone (D2) destiné à être utilisé en même temps que le drone considéré,
   les fréquences de récurrence respectives du drone considéré (D1) et de l'autre drone (D2) étant ajustées de manière que la différence entre ces fréquences vérifie la relation :

$$\text{abs}(F_1-F_2) / \max(F_1,F_2) > 2^*V_{max}/c + W^*\min(F_1,F_2) / F_s$$

   $F_1$ étant la fréquence de récurrence dudit drone considéré,
   $F_2$ étant la fréquence de récurrence dudit autre drone,
   $V_{max}$ étant la vitesse maximale, dans la direction d'estimation de la distance, dudit drone considéré,
   $c$ étant la vitesse de propagation du son,
   $W$ étant la largeur temporelle de la salve, et
   $F_s$ étant la fréquence d'échantillonnage du signal reçu ;

   - l'étape b) inclut la réception éventuelle de pics parasites issus d'émissions de salves d'ultrasons en provenance de l'autre drone ; et
   - l'étape d) comprend un filtrage par lequel ne sont conservés que les pics de la trame courante pour lesquels l'écart temporel relatif avec les pics de la trame précédente est inférieur à un seuil prédéterminé.

**2.** Le procédé de la revendication 1, dans lequel la différence entre les fréquences de récurrence du drone considéré (D1) et de l'autre drone (D2) est comprise entre 3% et 10%, de préférence 5%.

**3.** Le procédé de la revendication 1, dans lequel ledit seuil est déterminé en fonction de la variation maximale de chemin acoustique entre deux positions du drone à deux instants d'émission consécutifs, pour un déplacement du drone à sa vitesse maximale dans la direction d'estimation de la distance.

**4.** Le procédé de la revendication 3, dans lequel ledit seuil est déterminé par l'expression :

$$D = 2 * V_{max} * F_s / (c * F_{drone})$$

$D$ étant la valeur du seuil exprimée en nombre d'échantillons,
$V_{max}$ étant la vitesse maximale du drone dans la direction d'estimation de la distance,
$F_s$ étant la fréquence d'échantillonnage du signal reçu,
$c$ étant la vitesse de propagation du son, et
$F_{drone}$ étant la fréquence de récurrence des émissions de salves.

**5.** Le procédé de la revendication 3, dans lequel le seuil est augmenté d'un terme correctif fonction de la largeur temporelle de la salve d'ultrasons.

**6.** Le procédé de la revendication 5, dans lequel ledit seuil est déterminé par l'expression :

$$D = 2 * V_{max} * F_s / (c * F_{drone}) + W.F_s \ ,$$

$D$ étant la valeur du seuil exprimée en nombre d'échantillons,
$V_{max}$ étant la vitesse maximale du drone dans la direction d'estimation de la distance,
$F_s$ étant la fréquence d'échantillonnage du signal reçu,
$c$ étant la vitesse de propagation du son,
$F_{drone}$ étant la fréquence de récurrence des émissions de salves, et
$W$ étant la largeur temporelle de la salve, en nombre d'échantillons.

**7.** Le procédé de la revendication 1, dans lequel l'étape d) inclut également, en cas de pluralité de pics conservés après filtrage, la sélection du premier pic de la trame courante dans l'ordre de survenue des pics de signal successifs.

**8.** Le procédé de la revendication 1, dans lequel l'étape d) inclut également, en cas de pluralité de pics conservés après filtrage, la sélection du dernier pic de la trame courante dans l'ordre de survenue des pics de signal successifs.

**9.** Le procédé de la revendication 1, dans lequel, à l'issue de l'étape c) de comparaison des instants d'arrivée des $p$ pics de signal de la trame

**Patentansprüche**

**1.** Verfahren für eine Entfernungsschätzung durch Ultraschallfernmessung, das die folgenden Schritte umfasst:

a) Emission einer Ultraschallimpulsgruppe ab einem zeitlichen Ausgangspunkt, wobei diese Emission mit einer vorgegebenen Wiederholfrequenz wiederholt wird;
b) nach dem Ende jeder Emission und während der Dauer eines Zeitrahmens ($n$-1, $n$, $n$+1, ...) Trennen von zwei aufeinanderfolgenden Emissionen, Empfang einer Vielzahl von aufeinanderfolgend en zu entsprechenden Ankunftszeitpunkten im Verlauf des gleichen Rahmens auftretenden Signalspitzen, wobei diese aufeinanderfolgenden Signalspitzen parasitäre Spitzen ($E'_{n-1}$, $E'_n$, $E'_{n+1}$, ...) und eine Nutzspitze ($E_{n-1}$, $E_n$, $E_{n+1}$, ...) enthalten, die der zu schätzenden Entfernung entspricht;
c) für zwei aufeinanderfolgende Rahmen Vergleich der Ankunftszeitpunkte der $p$ Signalspitzen des aktuellen Rahmens mit den Ankunftszeitpunkten der $q$ Signalspitzen des vorhergehenden Rahmens und für jedes der *p.q* Spitzenpaare Bestimmung eines entsprechenden relativen zeitlichen Abstands;

d) Auswahl einer einzelnen Spitze des aktuellen Rahmens als Funktion der beim Schritt c) bestimmten relativen zeitlichen *p.q* Abstände und

e) Schätzung der Entfernung als Funktion des Ankunftszeitpunkts der bei dem Schritt d) in Bezug zum Emissionszeitpunkt der letzten Impulsgruppe ausgewählten Spitze,

**dadurch gekennzeichnet, dass**:

- dieses Verfahren durch eine Drohne (D1) für eine Höhenmessung (*h*) der Drohne umgesetzt wird;
- ein vorangehender Schritt zum Einstellen der Wiederholfrequenz auf einen vorgegebenen Wert, der sich von der entsprechenden Wiederholfrequenz einer anderen Drohne (D2) unterscheidet, die dazu bestimmt ist, zur gleichen Zeit wie die betrachtete Drohne benutzt zu werden, wobei die jeweiligen Wiederholfrequenzen der betrachteten Drohne (D1) und der anderen Drohne (D2) in einer Weise eingestellt werden, dass die Differenz zwischen diesen Frequenzen die Beziehung erfüllt:

$$\mathrm{abs}(F_1 - F_2) \; / \; \max(F_1, F_2) \; > \; 2*V_{max}/c \; + \; W*\min(F_1, F_2) \; / \; F_s$$

wobei

$F_1$ die Wiederholfrequenz der betrachteten Drohne ist,
$F_2$ die Wiederholfrequenz der anderen Drohne ist,
$V_{max}$ die maximale Geschwindigkeit in der Richtung der Entfernungsschätzung der betrachteten Drohne ist,
$c$ die Geschwindigkeit der Schallausbreitung ist,
$W$ die zeitliche Breite der Impulsgruppe ist und
$F_s$ die Abtastfrequenz des Empfangssignals ist;

- der Schritt b) den möglichen Empfang von parasitären Spitzen aus Emissionen von Ultraschallimpulsgruppen aus der anderen Drohne umfasst und
- der Schritt d) eine Filterung aufweist, durch die nur die Spitzen des aktuellen Rahmens gehalten werden, für die der relative zeitliche Abstand mit den Spitzen des vorhergehenden Rahmens unter einer vorgegebenen Schwelle liegt.

2. Verfahren nach Anspruch 1, in dem die Differenz zwischen den Wiederholfrequenzen der betrachteten Drohne (D1) und der anderen Drohne (D2) zwischen 3% und 10% liegt, vorzugsweise 5%.

3. Verfahren nach Anspruch 1, in dem die Schwelle für eine Lageveränderung der Drohne mit ihrer maximalen Geschwindigkeit in der geschätzten Richtung der Entfernung als Funktion der Maximaländerung des akustischen Pfads zwischen zwei Positionen der Drohne zu zwei aufeinanderfolgenden Emissionszeitpunkten festgelegt wird.

4. Verfahren nach Anspruch 3, in dem die Schwelle durch den Ausdruck festgelegt wird:

$$D = 2*V_{rnax}*F_s / (c*F_{drone})$$

wobei

$D$ der Wert der Schwelle, ausgedrückt in der Probenanzahl ist,
$V_{max}$ die maximale Geschwindigkeit der Drohne in der Richtung der Entfernungsschätzung ist,
$F_s$ die Abtastfrequenz des Empfangssignals ist,
$c$ die Geschwindigkeit der Schallausbreitung ist und
$F_{drone}$ die Wiederholfrequenz der Impulsgruppenemissionen ist.

5. Verfahren nach Anspruch 3, in dem die Schwelle um eine Funktionskorrekturgröße der zeitlichen Breite der Ultraschallimpulsgruppe erhöht wird.

6. Verfahren nach Anspruch 5, in dem die Schwelle durch den Ausdruck festgelegt wird:

$$D = 2*V_{max}*F_s/(c*F_{drone}) + W.F_s ,$$

wobei

$D$ der Wert der Schwelle, ausgedrückt in der Probenanzahl ist,

$V_{max}$ die maximale Geschwindigkeit der Drohne in der Richtung der Entfernungsschätzung ist,

$F_s$ die Abtastfrequenz des Empfangssignals ist,

$c$ die Geschwindigkeit der Schallausbreitung ist, $F_{drone}$ die Wiederholfrequenz der Impulsgruppenemissionen ist und

$W$ die zeitliche Breite der Impulsgruppe als Probenanzahl ist.

7. Verfahren nach Anspruch 1, in dem der Schritt d) ebenfalls im Fall der Vielzahl von nach Filterung gehaltenen Spitzen die Auswahl der ersten Spitze des aktuellen Rahmens in der Reihenfolge des Auftretens der aufeinanderfolgenden Signalspitzen einschließt.

8. Verfahren nach Anspruch 1, in dem der Schritt d) ebenfalls im Fall der Vielzahl von nach Filterung gehaltenen Spitzen die Auswahl der letzten Spitze des aktuellen Rahmens in der Reihenfolge des Auftretens der aufeinanderfolgenden Signalspitzen einschließt.

9. Verfahren nach Anspruch 1, in dem als Ergebnis des Schritts c) des Vergleichs der Ankunftszeitpunkte der $p$ Signalspitzen des aktuellen Rahmens mit den Ankunftszeitpunkten der $q$ Signalspitzen des vorhergehenden Rahmens und der Bestimmung für jedes der $p.q$ Spitzenpaare eines entsprechenden relativen zeitlichen Abstands im Fall der erkannten Anwesenheit von zwei Signalspitzen in dem gleichen relativen zeitlichen Abstandsintervall also ein Auswahlschritt der einzelnen Spitze des vorhergehenden Rahmens für die Entfernungsschätzung im Schritt e) anstelle desjenigen des aktuellen Rahmens vorgesehen ist.

## Claims

1. A method for estimating a distance by ultrasonic telemetry, comprising the following steps:

a) emitting, from a time instant of origin, a burst of ultrasound, this emission being repeated at a predetermined recurrence frequency;

b) after the end of each emission and for the duration of a time frame ($n$-1, $n$, $n$+1, ...) separating two consecutive emissions, receiving a plurality of successive signal peaks occurring at respective instants of arrival during a same frame, these successive signal peaks including spurious peaks ($E'_{n-1}$, $E'_n$, $E'_{n+1}$, ...) and one useful peak ($E_{n-1}$, $E_n$, $E_{n+1}$, ...) corresponding to the distance to be estimated;

c) for two consecutive frames, comparing the instants of arrival of the $p$ signal peaks of the current frame with the instants of arrival of the $q$ signal peaks of the preceding frame, and determining, for each of the $p.q$ peak couples, a corresponding relative time difference;

d) selecting a single peak of the current frame as a function of the $p.q$ relative time differences determined at step c); and

e) estimating the distance as a function of the instant of arrival of the peak kept à step d) with respect to the time of emission of the last burst,

**characterized in that**:

- this method is implemented by a drone (D1) for a measurement of altitude (h) of the drone;

- it is provided a previous step of adjusting said recurrence frequency to a predetermined value different from the corresponding recurrence frequency of another drone (D2) intended to be used at the same time of the considered drone,

the respective recurrence frequencies of the considered drone (D1) and of the other drone (D2) being adjusted so that the difference between these frequencies meets the relation:

$$\text{abs}(F_1-F_2) / \max(F_1,F_2) > 2*V_{max}/c + W*\min(F_1,F_2) / F_s$$

$F_1$ being the recurrence frequency of said considered drone, $F_2$ being the recurrence frequency of said other drone,

$V_{max}$ being the maximum speed, in the direction of estimation of the distance, of said considered drone,

$c$ being the sound propagation speed,

$W$ being the time width of the burst, and

$F_s$ being the frequency of sampling of the received signal;

- the step b) includes the possible receipt of spurious peaks coming from emissions of bursts of ultrasound from the other drone; and
- the step d) comprises a filtering through which are kept only the peaks of the current frame for which the relative time difference with the peaks of the preceding frame is lower than a predetermined threshold.

2. The method of claim 1, wherein the difference between the recurrence frequency of the considered drone (D1) and of the other drone (D2) is comprised between 3 % and 10 %, preferably 5 %.

3. The method of claim 1, wherein said threshold is determined as a function of the maximum variation of acoustic path between two positions of the drone at two consecutive instants of emission, for a displacement of the drone at its maximum speed in the direction of estimation of the distance.

4. The method of claim 3, wherein said threshold is determined by the expression:

$$D = 2^* V_{max}{}^* F_s \, / \, (c^* F_{drone})$$

$D$ being the threshold value expressed in number of samples,

$V_{max}$ being the maximum speed of the drone, in the direction of estimation of the distance

$F_s$ being the frequency of sampling of the received signal;

$c$ being the sound propagation speed, and

$F_{drone}$ being the recurrence frequency of the emissions of bursts.

5. The method of claim 3, wherein said threshold is increased by a corrective term that is function of the time width of the burst of ultrasound.

6. The method of claim 5, wherein said threshold is determined by the expression:

$$D = 2^* V_{max}{}^* F_s \, / \, (c^* F_{drone}) \, + \, W.F_s$$

$D$ being the threshold value expressed in number of samples,

$V_{max}$ being the maximum speed of the drone, in the direction of estimation of the distance

$F_s$ being the frequency of sampling of the received signal;

$c$ being the sound propagation speed,

$F_{drone}$ being the recurrence frequency of the emissions of bursts, and

$W$ being the time width of the burst, in number of samples.

7. The method of claim 1, wherein step d) also includes, in case of a plurality of peaks kept after filtering, selecting the first peak of the current frame in the order of occurrence of the successive signal peaks.

8. The method of claim 1, wherein step d) also includes, in case of a plurality of peaks kept after filtering, selecting the last peak of the current frame in the order of occurrence of the successive signal peaks.

9. The method of claim 1, wherein, at the end of step c) of comparing the instants of arrival of the $p$ signal peaks of the current frame with the instants of arrival of the $q$ signal peaks of the preceding frame and of determining, for each of the $p.q$ peak couples, a corresponding relative time difference, in case of detected presence of two peaks in the same interval of relative time difference, then it is provided a step of selecting the single peak of the preceding frame for the estimation of the distance at step e), instead of that of the current frame.

Fig. 1

Fig. 2

Fig. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4845682 A
- US 6545946 B1
- DE 4003775 A1
- US 2003112705 A1